(19) Europäisches Patentamt
European Patent Office
Office européen des brevets

(11) **EP 1 671 934 B1**

(12) **EUROPEAN PATENT SPECIFICATION**

(45) Date of publication and mention
of the grant of the patent:
**11.10.2017 Bulletin 2017/41**

(51) Int Cl.:
***C03B 9/38*** (2006.01)

(21) Application number: **04771526.3**

(22) Date of filing: **11.08.2004**

(86) International application number:
**PCT/JP2004/011541**

(87) International publication number:
**WO 2005/028384 (31.03.2005 Gazette 2005/13)**

(54) **GLASS-FORMING MACHINE**

GLASFORMGEBUNGSMASCHINE

MACHINE POUR MOULER LE VERRE

(84) Designated Contracting States:
**DE ES FR GB IT**

(30) Priority: **19.09.2003 JP 2003327418**

(43) Date of publication of application:
**21.06.2006 Bulletin 2006/25**

(73) Proprietor: **Nihon Yamamura Glass Co. Ltd.
Nishinomiya-shi,
Hyogo 662-0923 (JP)**

(72) Inventors:
• **NAGAI, Hiroyuki
Nishinomiya-shi,
Hyogo 662-0923 (JP)**
• **UEDA, Mitsuo
Nishinomiya-shi,
Hyogo 662-0923 (JP)**

• **MYOUJIN, Yutaka
Nishinomiya-shi,
Hyogo 662-0923 (JP)**
• **HASHIMOTO, Katsumi
Nishinomiya-shi,
Hyogo 662-0923 (JP)**

(74) Representative: **Manitz Finsterwald Patentanwälte
PartmbB
Martin-Greif-Strasse 1
80336 München (DE)**

(56) References cited:
GB-A- 2 060 603    JP-A- 8 012 349
JP-A- 11 224 101    JP-A- 11 224 101
JP-A- 63 011 528    JP-A- 2002 037 634
JP-A- 2002 037 634    JP-A- 2003 137 568

**Description**

TECHNICAL FIELD

The present invention relates to a glass-forming machine for forming glass products such as bottles in a plurality of sections, e.g., a bottle making machine. Particularly, the present invention relates to a glass-forming machine including cooling mechanisms each of which exposes a mold to a cooling wind so as to control a temperature of the mold according to the preamble of claim 1. The features of the preamble of claim 1 are known from Japanese Patent Laid-Open Publication No. 2002-37634.

BACKGROUND ART

A conventional bottle making machine called as "IS machine" is divided into a plurality of sections in each of which a bottle is formed by using an individual mold. Each section includes a blank mold that receives a gob put therein to form a parison and a blow mold that receives the parison transferred from the blank mold to shape the parison into a desired bottle shape.

A bottle manufactured in each section one after another is sent to a transfer path and is carried to a lehr process. The bottle cooled in the lehr process is carried to a final packing process via an inspection process. In the inspection process, inspection using an inspection machine or with eyes is performed so as to determine whether or not any defect is in the bottle. The bottle determined to be defective as a result of the inspection is taken out and recalled as a defective product.

A temperature sensor is provided for a mold in each section. A temperature of the mold detected by the temperature sensor is displayed on a temperature indicator panel.

Each section also includes a cooling mechanism for exposing a mold to a cooling wind so as to individually control a temperature of the mold. If a temperature of a mold is higher than a target temperature, it is necessary to increase an air volume of the cooling wind in the cooling mechanism corresponding to that mold so as to promote radiation of a heat from the mold and lower the temperature of the mold. On the other hand, if the mold temperature is lower than the target temperature, it is necessary to raise the mold temperature by reducing the air volume of the cooling wind to suppress the heat radiation from the mold.

The cooling wind to which the mold is exposed usually depends on an outside air temperature. When the outside air temperature is changed, a temperature of the cooling wind is also changed, thus changing the mold temperature during formation. In the case where the mold temperature is not appropriate, a bottle formed in a corresponding section is different from an appropriate bottom in a shape such as a swelling portion. Moreover, a defect such as a crack and a wrinkle may be generated in the product.

Conventionally, a skillful worker always monitors the temperature of each mold by watching indication on the temperature indicator panel, and adjusts the air volume of the cooling wind by changing opening and closing timings of a valve by a manual operation, so that the temperature of the mold is changed. However, the manual operation largely draws on the worker's hunch and experience. Therefore, it is difficult to perform glass formation at a stable temperature.

A method is proposed in order to overcome the aforementioned problem, in which, when the temperature of the mold is controlled by making a cooling air blow to the surface of the mold, a temperature, a pressure, and a humidity of the cooling air in a duct that is directed from a blower to the mold are detected. Then, feedback control is performed to adjust the pressure and the humidity of the cooling air, thereby automatically keeping the temperature of the mold constant (see Japanese Patent Laid-Open Publication No. Showa 53-147707, for example). Moreover, another method is proposed in which a temperature inside the mold and a change of a disturbance factor are detected, an opening and closing amount of a valve for adjusting the air volume of the cooling wind is determined based on a temperature at a certain time, and the opening and closing amount of the valve is corrected based on the change amount of the disturbance factor, so that the temperature of the mold is automatically controlled (see Japanese Patent Laid-Open Publication No. 2002-37634, for example).

However, the former method cannot deal with a case where the mold temperature deviates from a target temperature because of a factor other than the cooling air, and therefore cannot perform automatic control with high precision. Moreover, all molds are exposed to the cooling wind having the same condition in the former method. Thus, there arises a problem in which, if the mold temperatures are different between the sections, it is not possible to perform control for an individual mold.

The latter method requires a device for detecting the disturbance factor and a device for detecting the mold temperature, thus making a structure complicated and expensive. In addition, there arises another problem in which the latter method cannot deal with a case where the mold temperature deviates from the target temperature because of a factor other than the detected disturbance factor.

In view of the foregoing problems, it is an object of the present invention to provide a glass-forming machine that can control a temperature of each mold with high precision by a simple structure only by detecting the temperature of the mold and performing feedback control.

## DISCLOSURE OF THE INVENTION

The present invention is defined in claim 1.

In the above structure of the present invention, the "mold" includes a blank mold that receives a gob put therein to form a parison and a blow mold that receives the parison transferred from the blank mold to shape it into a desired shape. The "cooling mechanism" includes various modes, e.g., a mode that makes the cooling wind blow to an outer surface of the mold so as to cool the mold from the outside, a mode that introduces the cooling wind into a cooling path running through the mold so as to cool the mold from the inside, and other modes.

Moreover, a thermocouple type temperature sensor is suitable for the "temperature sensor." However, the invention is not limited thereto. The temperature sensor is provided while being embedded in an attachment hole formed in the mold, for example. However, a manner of providing the temperature sensor is not limited thereto.

Furthermore, the "valve mechanism" includes various modes, e.g., a mode using an air cylinder as an actuator, a mode using a ball screw mechanism, and other modes.

In the glass-forming device having the above structure, based on the temperature of the mold detected by the temperature sensor, the operation amount of the valve mechanism for that mold is determined by PID control to control the air volume of the cooling wind. Thus, only by detecting the temperature of the mold and performing feedback control, the temperature of each mold can be controlled with high precision by a simple structure.

Incidentally, the "controlling unit" can be implemented by an exclusive hardware circuit or a programmed computer. It is preferable that a single programmed computer serve as the controlling units of all the cooling mechanisms.

Incidentally, it is desirable to use all the detected temperatures extracted in past times in the calculation of the integral term. However, the invention is not limited thereto. The calculation of the integral term may use a predetermined number of detected temperatures from the recent one in turn.

According to the above embodiment, the mold temperature cannot vary in a wide range with respect to the target temperature, and it is possible to perform adjustment that makes the mold temperature smoothly reach the target temperature. Moreover, it is unnecessary to provide an integration section. Thus, the calculation can be simplified.

In a preferred embodiment of the present invention, the controlling unit consists of a first computer system for setting an operation timing of each component related to formation of glass products and a second computer system for controlling the air volume of the cooling wind for each of the molds. The first computer system determines a cooling timing for each of the molds and outputs a timing signal to the second computer system. The second computer system performs control for a mold corresponding to the timing signal in response to the timing signal.

Incidentally, it is desirable that the first computer system be formed as a distributed processing system including a plurality of computers. On the other hand, the second computer system may be formed by a plurality of computers or a single computer.

In another preferred embodiment of the present invention, the controlling unit consists of a computer system having a function of setting an operation timing of each component related to formation of glass products and a function of controlling the air volume of the cooling wind for each of the molds. The computer system determines a cooling timing for each of the molds and individually performs control for each of the molds based on the determination result. Incidentally, it is also desirable that the computer system of this embodiment be formed as a distributed processing system including a plurality of computers.

In still another preferred embodiment of the present invention, the controlling unit corrects a result of the calculation by PID control to a predetermined upper limit when the result is larger than the upper limit and corrects the result to a predetermined lower limit when the result is smaller than the lower limit. According to this embodiment, the operation amount of the valve mechanism cannot be determined to be an extreme value. Thus, a rapid change in the temperature of the mold can be prevented and generation of a defect such as a crack and a wrinkle in a glass product can be prevented.

In still another preferred embodiment of the present invention, when a difference between a current result of the calculation by PID control and a previous result of the calculation exceeds a predetermined threshold value, the controlling unit corrects the current result to make the difference from the previous result equal to the threshold value. According to this embodiment, it is also possible to prevent a rapid change in the temperature of the mold and generation of a defect such as a crack and a wrinkle in a glass product.

## BRIEF DESCRIPTION OF THE DRAWINGS

Fig. 1 is a diagram showing the configuration of a mold temperature control system of a bottle making machine as one example according to the present invention.

Fig. 2 is a cross-sectional view showing the structure of a valve mechanism.

Fig. 3 is a time chart showing a method for controlling an opening and closing operation of the valve mechanism.

Fig. 4 is a block diagram showing the configuration of a temperature control device.

Fig. 5 is a flowchart of control by MPU of the temperature control device.

Fig. 6 is a diagram showing temperature characteristics of a mold in a bottle making machine for which automatic temperature control is performed and those in a bottle making machine for which manual temperature control is performed.

Fig. 7 is a diagram showing the configuration of a mold temperature control system of a bottle making machine according to another example of the present invention.

Best Mode for carryING out the Invention

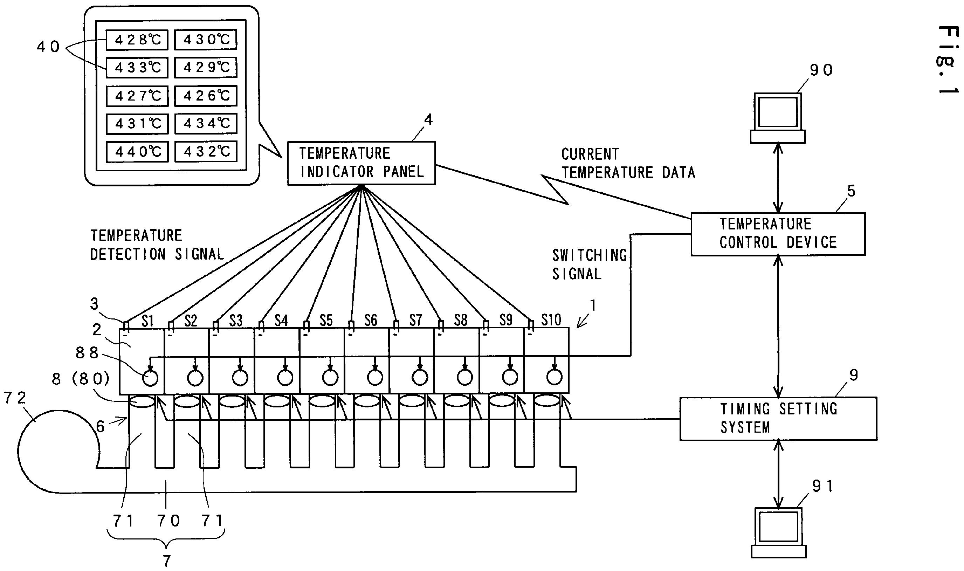

Fig. 1 shows a general configuration of a mold temperature control system of a bottle making machine as one example according to the present invention.

A machine body 1 of the bottle making machine in the shown example includes a plurality of (10 in this example) sections S1 to S10. In each of the sections S1 to S10, bottles are manufactured one after another and are sent to a bottle transfer path that is not shown. The bottle transfer path carries a formed bottle to a lehr device. The cooled bottle is then transported to an inspection process. The inspected bottle is carried to a packing process.

Each of the sections S1 to S10 includes a blank mold that receives a block of melted glass called as a "gob" to form a parison and a blow mold that shapes the parison transferred from the blank mold into a bottle having a final shape.

The "gob" is supplied by a gob supply mechanism that is not shown to the blank mold in each of the sections S1 to S10 one after another at an appropriate timing. A bottle finished in the blow mold in each of the sections S1 to S10 is sent to a conveyor forming the bottle transfer path.

An operation of each of the sections S1 to S10 is individually controlled by a timing setting system 9 in sequence. The timing setting system 9 is a distributed processing system formed by a number of microcomputers (hereinafter, referred to as "MPUs"). The timing setting system 9 generates and outputs control signals (hereinafter, generically referred to as "timing signals") indicating timings of start and stop of operations of various mechanisms included in the respective sections S1 to S10 in such a manner that the respective mechanism operates in a predetermined order.

In each of the blank mold and the blow mold (hereinafter, simply referred to as "mold 2") of each of the sections S1 to S10, a thermocouple type temperature sensor 3 for detecting a temperature of each mold 2 is provided by being embedded in the mold, for example. The temperature sensor 3 outputs a temperature detection signal having an analog amount (e.g., a current value) that is in proportion to the temperature of the mold 2. The temperature detection signal of the temperature sensor 3 provided in one mold (e.g., blank mold) is input to a temperature indicator panel 4, while the temperature detection signal of the temperature sensor 3 provided in the other mold (e.g., blow mold) is input to another temperature indicator panel that is not shown.

The temperature sensor 3 may be a type other than the thermocouple type. Moreover, the number of temperature sensors 3 and a position at which the temperature sensor 3 is provided are not limited to those in this example.

The temperature indicator panel 4 includes an A/D converter for inputting the temperature detection signals from the temperature sensors 3 in the respective molds 2 and converting them into signals each having a digital amount (hereinafter, referred to as "current temperature data"), and ten (10) temperature indicators 40 that respectively indicate temperatures of the molds 2 of the sections S1 to S10 in a digital form based on the current temperature data. The current temperature data for each mold 2 is taken into a temperature control device 5 at a constant interval. The temperature control device 5 controls an opening and closing operation of a valve mechanism 8 described later based on the current temperature data thus taken, thereby controlling an air volume of a cooling wind for cooling the mold 2. A timing at which the temperature control device 5 controls the air volume of the cooling wind is controlled by the timing signal from the timing setting system 9.

Each mold 2 is provided with a cooling mechanism 6 for exposing that mold 2 to the cooling wind so as to individually control the temperature of that mold 2. The cooling mechanism 6 of this example makes the cooling wind blow to an outer surface of the mold 2 so as to cool the mold 2 from the outside. Alternatively, the cooling mechanism 6 may introduce the cooling wind into a cooling path that is arranged to run through the mold 2, so as to cool the mold 2 from the inside.

Each cooling mechanism 6 includes a cooling wind path 7 for directing the cooling wind to the mold 2 and a valve mechanism 8 for opening and closing a branch path 71 diverging from a main path 70 of the cooling wind path 7. The main path 70 directs the cooling wind generated by a blower 72 to 10 branch paths 71. Each branch path 71 directs the cooling wind to an outlet (not shown) arranged around the corresponding mold 2.

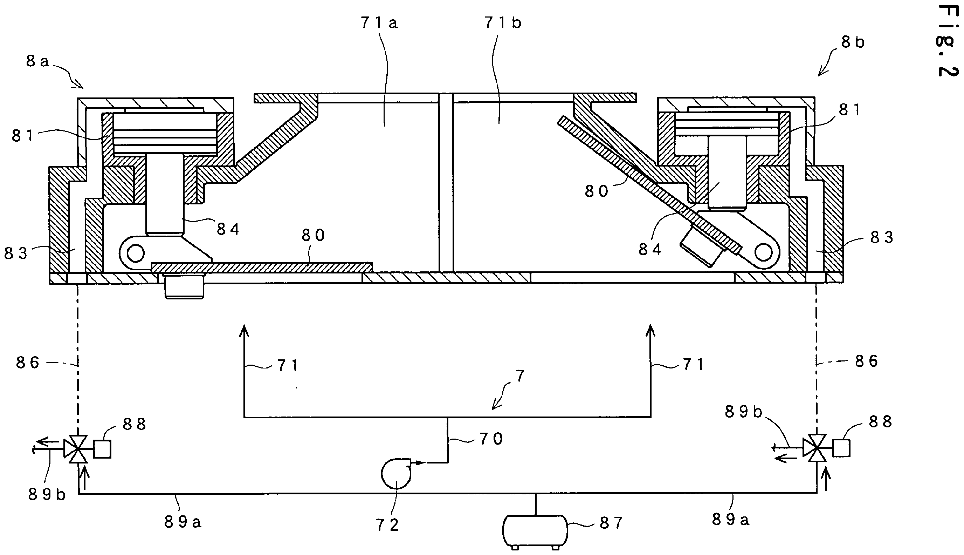

Fig. 2 shows a specific example of the valve mechanism 8. In Fig. 2, two branch paths 71a and 71b lead to separate molds 2, respectively. Valves 80 of valve mechanisms 8a and 8b are provided in the branch paths 71a and 71b, respectively, in such a manner that they can be opened and closed.

Each of the valve mechanism 8a and 8b includes an air cylinder 81 as an actuator. When an air is supplied from an air path 83 to the air cylinder 81, a piston rod 84 projects and closes the valve 80. When supply of the air to the air cylinder 81 is stopped, the valve 80 is pushed and opened by receiving a pressure of the cooling wind.

An air lead-out and introduction tube 86 is connected to the air path 83. To the air lead-out and introduction tube 86, an air supply tube 89a and an air exhaust tube 89b are connected via an electromagnetic changeover valve 88. The air supply tube 89a is in communication with a compressor 87. The air exhaust tube 89b is opened to an atmospheric air. When the electromagnetic changeover valve 88 is switched to one direction, air is supplied from the compressor 87 to the air cylinder 81 through the air supply tube 89a, the air lead-out and introduction tube 86, and the air path 83. When the electromagnetic changeover valve 88 is switched to the other direction, the air supplied to the air cylinder 81 escapes to the outside through the air path 83, the air lead-out and introduction tube 86, and the air exhaust tube 89b.

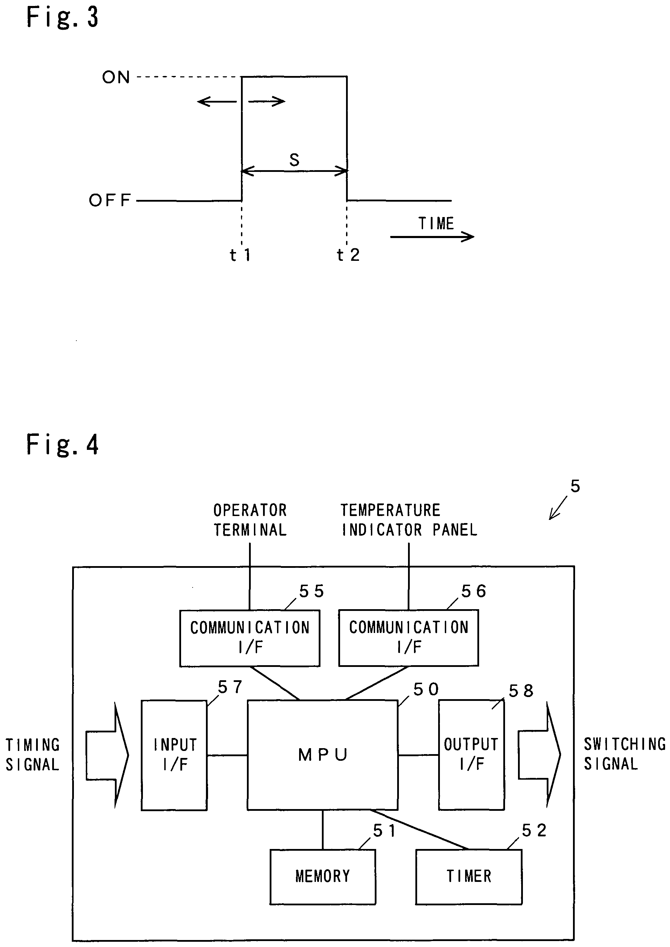

Fig. 3 shows a method for controlling an opening and closing operation of the valve mechanism 8. In Fig. 3, S represents a length of a period during which the valve 80 is opened, i.e., a cooling time. The cooling time corresponds to an operation amount of the valve mechanism 8. The valve 80 is opened at t1 and is closed at t2. At each of t1 ant t2, a switching signal is supplied to the electromagnetic changeover valve 88. Alternatively, an opening amount of the valve 80 may be used as the operation amount of the valve mechanism 8, instead of the time S in which the valve 80 is opened.

The opening and closing operation of the valve mechanism 8 is controlled based on the temperature of the mold 2 detected by the temperature sensor 3. In this manner, the air volume of the cooling wind is controlled. The time S in which the valve 80 is opened is determined by performing a calculation by PID control. In this example, the timing t2 at which the valve 80 is closed is fixed and the timing t1 at which the valve 80 is opened is changed in accordance with the calculation result, as shown with arrows in Fig. 3.

It is assumed that a target temperature of a mold 2 is $T_{si}$ and a current temperature of the mold 2 (corresponding to "current temperature data") is $T_{pi}$. A difference $\Delta T_i$ (hereinafter, referred to as "temperature deviation") between the current temperature $T_{pi}$ and the target temperature $T_{si}$ is given by $\Delta T_i = T_{pi} - T_{si}$.

The current temperature data is fetched in the temperature control device 5 at a constant interval and is sequentially accumulated in a memory 51 described later. i represents an argument for individually specifying units of the current temperature data thus accumulated. The argument i = 0 is associated with the most recent unit of the current temperature data and the arguments i = -1, -2, -3, .... are associated with respective units of the current temperature data in an order in which the units go back to the past. In the following description, the argument i associated with the oldest unit of the accumulated data is assumed to be $-\infty$.

PID control is a combination of proportional control, integral control, and derivative control. When PID control is carried out by means of a programmed computer, an arithmetic expression by PID control includes: a proportional term given by a product of a proportional coefficient A and the temperature deviation $\Delta T_i$; an integral term given by a product of an integral coefficient B and an accumulated value of the temperature deviation $\Delta T_i$; and a derivative term given by a product of a derivative coefficient C and a difference between a previous temperature deviation and the current temperature deviation ($\Delta T_0 - \Delta T_{-1}$).

In order to calculate the accumulated value of the temperature deviation $\Delta T_i$ in the integral term, a range of integration is set to a range from zero to negative infinity and the temperature deviations $\Delta T_i$ for zero to negative infinity are weighted with $2^i$. i.e., $2^0$, $2^{-1}$, $2^{-2}$, $2^{-3}$, ...., respectively, as shown in Expression (1) set forth below. Thus, the arithmetic expression by PID control is given by Expression (2).

It is usually necessary to provide an integration interval for the integral term in PID control. However, no integration interval is required in this example because weighting is performed.

A weighting coefficient is not limited to $2^i$. It may be $n^i$ (n > 0).

Moreover, i associated with the past data can be set to a positive value (i.e., i = 0, 1, 2, ... $\infty$), instead of a negative value. In this case, the weighting coefficient can be set to $1/n^i$ (n > 0), for example.

[Expression 1]

$$Integral\_term = B \times \sum_{i=0}^{-\infty}(\Delta Ti \times 2^i) \quad \cdots (1)$$

[Expression 2]

$$Operation\_amount = A \times \Delta Ti + B \times \sum_{i=0}^{-\infty}(\Delta Ti \times 2^i) + C(\Delta T_0 - \Delta T_{-1}) \quad \cdots (2)$$

In this example, the temperature control device 5 performs a calculation by PID control based on the above principle so as to obtain the operation amount of the valve mechanism 8 (the time S in which the valve 80 is opened), and controls the opening and closing operation of the valve 80 based on the calculation result. Moreover, in this example, in order to prevent a rapid change in the temperature of the mold 2 caused by determination that the operation amount of the valve mechanism 8 is an extreme value, the result of the calculation by PID control is corrected. When the calculation result exceeds a predetermined upper limit, the result is corrected to the upper limit. When the result is smaller than a predetermined lower limit, the result is corrected to the lower limit. In addition, in this example, when a difference between a current result of the calculation and a previous result of the calculation exceeds a predetermined threshold value, the current result is corrected so as to make the difference from the previous result equal to the threshold value.

The valve 80 is opened and closed by switching the electromagnetic changeover valve 88. A switching signal for the electromagnetic changeover valve 88 is supplied from the temperature control device 5.

Fig. 4 shows a detailed structure of the temperature control device 5. The temperature control device 5 includes an MPU 50 that has a key role for control and calculation, a memory 51 for storing a program and data, and a timer 52 for measuring time. The MPU 50 is connected to an operator terminal 90 and the temperature indicator panel 4 via communication interfaces 55 and 56. The MPU 50 further inputs the timing signal from the timing setting system 9 via an input interface 57 and outputs the switching signal to the electromagnetic changeover valve 88 of each of the sections S1 to S10 via an output interface 58.

The timing setting system 9 sets an operation timing of each component of the entire bottle making machine, and outputs for each of the sections S1 to S10 the timing signal that instructs that section to cool the mold 2 to the temperature control device 5. When the timing signal indicating cooling is input from the timing setting system 9, the MPU 50 of the temperature control device 5 determines that it is a time to cool a mold 2 in a predetermined section and also determines the cooling time S. Then, the MPU 50 sends the switching signal to the electromagnetic changeover valve 88 of the corresponding section at a timing based on the cooling time S.

In Fig. 1, one operator terminal 90 is used for inputting the target temperature, the respective coefficients A, B, C, and other coefficients for PID control, to the temperature control device 5 and setting them, and another operator terminal 91 is used for inputting various data related to an operation of the bottle making machine to the timing setting system 9 and setting that data.

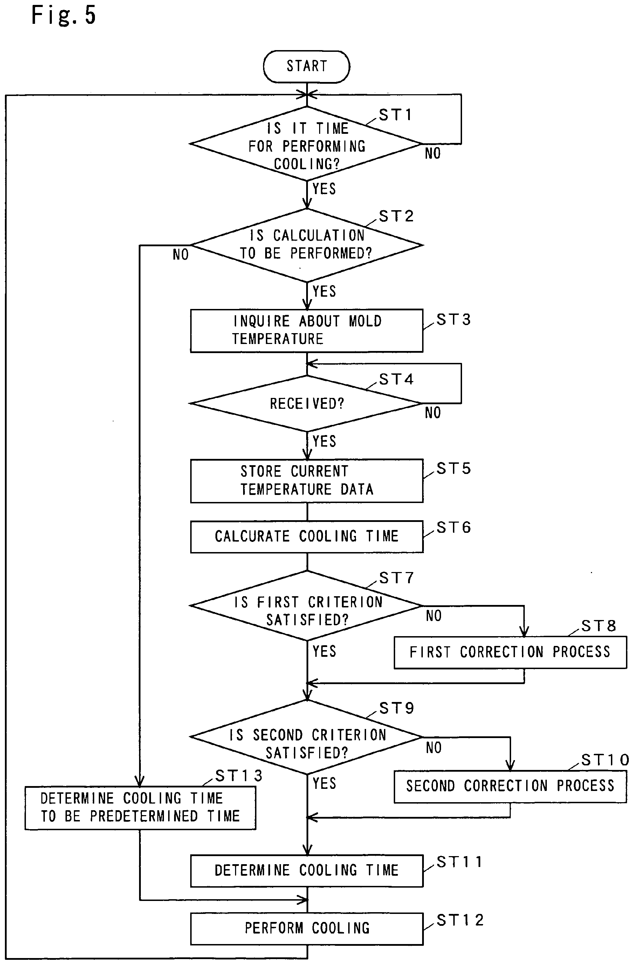

Fig. 5 shows a control flow in the case where the MPU 50 of the temperature control device 5 determines the cooling time and causes cooling to be performed for each mold 2. In Fig. 5, "ST" stands for "STEP" and represents each procedure in the control flow.

In ST1 in Fig. 5, it is determined whether or not it is a time to cool a mold 2 to be controlled. When the timing signal from the timing setting system 9 is input, the determination result in ST1 is "YES" and it is then determined whether or not a calculation for obtaining a cooling time is to be performed (ST2). If the determination result in ST2 is "YES," the flow proceeds to ST3. However, when the calculation is not performed in every control and the determination result in ST2 is "NO," the flow proceeds to ST13 in which the cooling time is determined to be a predetermined cooling time.

In the case where the calculation is performed, the determination result in ST2 is "YES" and the MPU 50 asks the temperature indicator panel 4 about a temperature of a corresponding mold 2 (ST3). When current temperature data is sent from the temperature indicator panel 4 in response to that inquiry, a determination result in ST4 is "YES" and the current temperature data is stored in the memory 51 (ST5).

Then, the MPU 50 performs the aforementioned calculation by PID control, thereby obtaining the cooling time S (ST6). In other words, while a value of i described above is changed from 0 in turn, the current temperature data associated with the value of i is read out and a temperature deviation is obtained from the thus read current temperature data and the target temperature input from the operator terminal 90. The cooling time S is then calculated by assigning the temperature deviation $\Delta T_i$ that is obtained for each value of i in Expression (2).

In accordance with the above-described Expression (2), a calculation using all units of the current temperature data that are accumulated in the temperature control device 5 is performed. However, the present invention is not limited thereto. A predetermined number of units of the current temperature data from the most recent unit may be read in turn so that the calculation is performed using them.

In ST7, it is determined whether or not the calculation result is within a predetermined range. If the calculation result is within the predetermined range, it is determined that a first criterion is satisfied and the determination result in ST7 is "YES." Therefore, the calculation result is not corrected. If the calculation result is out of the predetermined range, it is determined that the first criterion is not satisfied and the determination result in ST7 is "NO." Therefore, the MPU 50 performs a first correction process (ST8). In the first correction process, the calculation result is corrected to a predetermined upper limit when the result exceeds the upper limit, or is corrected to a predetermined lower limit when the result is smaller than the lower limit.

In ST9, it is determined whether or not a difference between a current result of the calculation (the corrected data in the case where the first correction process has been performed) and a previous result of the calculation is larger than a predetermined threshold value. If the current calculation result is not larger than the threshold value, it is determined that a second criterion is satisfied and the determination result in ST9 is "YES." If the calculation result is larger than the threshold value, it is determined that the second criterion is not satisfied and the determination result in ST9 is "NO." Therefore, the MPU 50 performs a second correction process (ST10). The second correction process is one for correcting the current calculation result so as to make the difference from the previous calculation result equal to the threshold value.

The cooling time obtained by performing the above processes is determined as a current cooling time for the corresponding mold 2 and is stored in the memory 51 (ST11). Then, the opening and closing operation of the valve mechanism 8 is performed based on the thus determined cooling time, so as to perform a cooling process (ST12). The same processes are performed for another mold 2, so that the cooling time is determined and the cooling is performed.

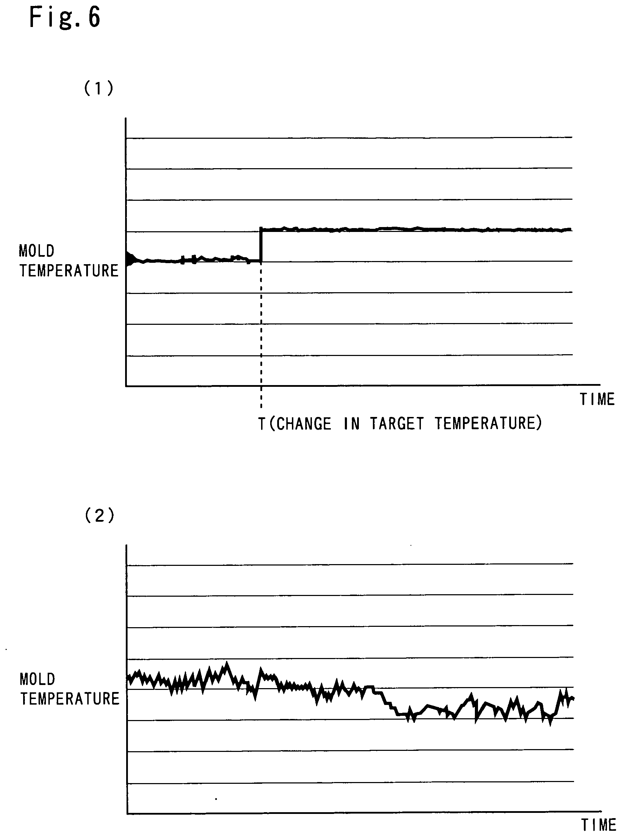

Fig. 6(1) shows temperature characteristics of a mold in a bottle making machine for which the aforementioned automatic temperature control is performed. The temperature of the mold is controlled to be approximately constant with respect to the elapsed time. Although the target temperature is changed at a time T in the shown example, the temperature of the mold promptly follows the change in the target temperature. Fig. 6(2) shows temperature characteristics of a mold in a bottle making machine for which manual temperature control is performed. The temperature of the mold changes with time and cannot be controlled to be constant.

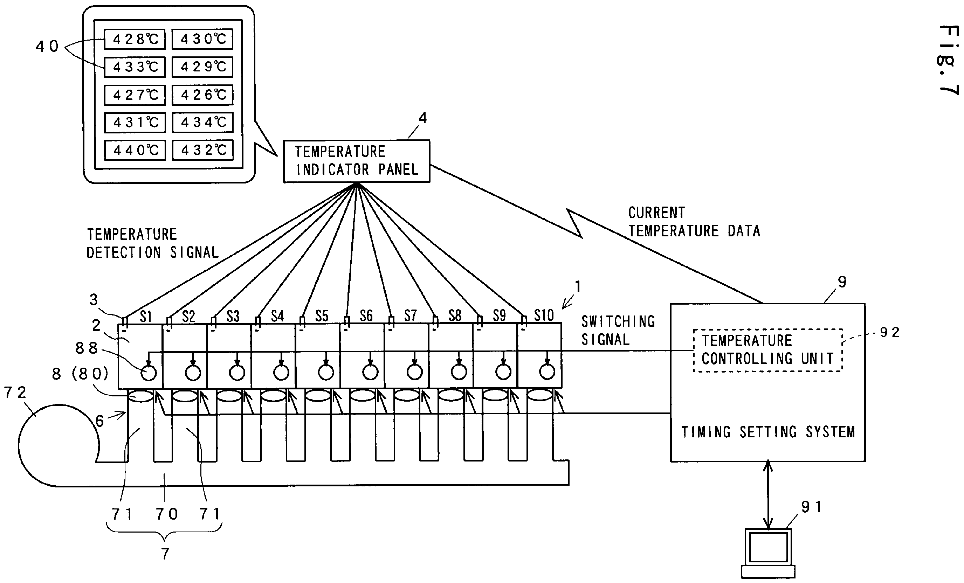

Fig. 7 shows another example of the mold temperature control system. In this system, the temperature control device 5 in Fig. 1 is not provided. Instead, a temperature controlling unit 92 having the same function as the temperature control device 5 is included in the timing setting system 9. Except for that, the structure of the mold temperature control system of this example is the same as that shown in Fig. 1. Therefore, the respective components are labeled with the same reference numerals as those in Fig. 1 and the detailed description thereof is omitted.

The timing setting system 9 of this example individually controls operations of the sections S1 to S10 in sequence. At the timing for cooling a mold 2 of a certain section, the temperature controlling unit 92 is notified of that fact.

The temperature controlling unit 92 performs the control shown in Fig. 5 for each of the sections S1 to S10. When the temperature controlling unit 92 determines the cooling timing, the determination result in ST1 is "YES." Thus, the temperature controlling unit 92 performs the temperature control for the mold 2 by performing the processes in ST2 and the subsequent steps.

In the example shown in Fig. 7, the temperature control function is provided in the timing setting system 9. Thus, an exclusive device for adjusting a temperature of a mold 2 is not required. Therefore, it is possible to reduce a space, simplify the structure, and reduce a cost. Moreover, in this example, when there is the same data between setting data used for temperature control for a mold 2 and setting data used for controlling formation of a bottle, that data can be used in each control as shared data. Therefore, a task for entering redundant data can be omitted and memory resources can be used effectively.

**Claims**

1. A glass-forming machine comprising:

   a plurality of molds (2) adapted for forming glass products;
   cooling mechanisms (6) adapted for exposing a cooling wind to the respective molds (2) to individually control temperatures of the respective molds (2), each of the cooling mechanisms (6) including a temperature sensor (3) adapted for detecting a temperature of a corresponding mold (2), a path (7) adapted for introducing the cooling wind to the mold (2), and a valve mechanism (8) adapted for opening and closing the path (7), and
   a controlling unit adapted for controlling an opening and closing operation of the valve mechanism (8) of each mold (2), based on the temperature of the mold (2) detected by the corresponding temperature sensor (3), to control an air volume of the cooling wind that is introduced into the mold (2),
   wherein the controlling unit is adapted for determining an operation amount of each of the valve mechanisms (8) by PID control,
   wherein the controlling unit is adapted for performing a calculation by PID control using the detected temperature of the mold (2) extracted at a constant interval to obtain the operation amount of the valve mechanism (8), and an expression of the calculation includes a proportional term, an integral term, and a derivative term;
   wherein the integral term is a product of an accumulated value of a temperature deviation of the detected temperature with respect to a target temperature and an integral coefficient; the accumulated value of the temperature deviation is a summation of products of the temperature deviations of the detected temperatures extracted from a present time to a predetermined past time and predetermined weighting coefficients; and the weighting coefficient is set to be smaller as it corresponds to the older detected temperature.

2. The glass-forming machine according to claim 1, wherein
   the controlling unit consists of a first computer system (9) adapted for setting an operation timing of each component

**EP 1 671 934 B1**

related to formation of glass products and a second computer system (5) adapted for controlling the air volume of the cooling wind for each of the molds (2);

wherein the first computer system (9) is adapted for determining a cooling timing for each of the molds (2) and outputing a timing signal to the second computer system (5); and

the second computer system (5) is adapted for performing control for a mold (2) corresponding to the timing signal in response to the timing signal.

3. The glass-forming machine according to claim 1, wherein
the controlling unit consists of a computer system having a function of setting an operation timing of each component related to formation of glass products and a function of controlling the air volume of the cooling wind for each of the molds (2);

wherein the computer system is adapted for determining a cooling timing for each of the molds (2) and individually performing control for each of the molds (2) based on the determination result.

4. The glass-forming machine according to claim 1, wherein
the controlling unit is adapted for correcting a result of the calculation by PID control to a predetermined upper limit when the result is larger than the upper limit and correcting the result to a predetermined lower limit when the result is smaller than the lower limit.

5. The glass-forming machine according to claim 1, wherein
the controlling unit is adapted for correcting the current result to make the difference from the previous result equal to the threshold value, when a difference between a current result of the calculation by PID control and a previous result of the calculation exceeds a predetermined threshold value.

**Patentansprüche**

1. Glasformgebungsmaschine, umfassend:

eine Vielzahl von Formen (2), die zum Formgeben von Glasprodukten eingerichtet sind;
Kühlmechanismen (6), die eingerichtet sind, um die jeweiligen Formen (2) einem Kühlwind auszusetzen, um Temperaturen der jeweiligen Formen (2) individuell zu steuern, wobei jeder der Kühlmechanismen (6) einen Temperatursensor (3), der eingerichtet ist, um eine Temperatur einer zugehörigen Form (2) zu detektieren, eine Strecke (7), die eingerichtet ist, um den Kühlwind der Form (2) zuzuführen, und einen Ventilmechanismus (8), der zum Öffnen und Schließen der Strecke (7) eingerichtet ist, enthält, und
eine Steuerungseinheit, die eingerichtet ist, um eine Öffnungs- und Schließoperation des Ventilmechanismus (8) einer jeden Form (2) auf der Grundlage der Temperatur der Form (2), die von dem zugehörigen Temperatursensor (3) detektiert wird, zu steuern, um ein Luftvolumen des Kühlwinds, der der Form (2) zugeführt wird, zu steuern,
wobei die Steuerungseinheit eingerichtet ist, um einen Betätigungsbetrag von jedem der Ventilmechanismen (8) durch eine PID-Regelung zu bestimmen,
wobei die Steuerungseinheit eingerichtet ist, um eine Berechnung durch PID-Regelung unter Verwendung der detektierten Temperatur der Form (2), welche mit einem konstanten Intervall geholt wird, auszuführen, um den Betätigungsbetrag des Ventilmechanismus (8) zu beschaffen, und wobei ein Berechnungsausdruck einen proportionalen Term, einen integralen Term und einen derivativen Term umfasst;
wobei der integrale Term ein Produkt aus einem angesammelten Wert einer Temperaturabweichung der detektierten Temperatur mit Bezug auf eine Zieltemperatur mit einem integralen Koeffizienten ist; der angesammelte Wert der Temperaturabweichung eine Summe von Produkten der Temperaturabweichungen der detektierten Temperaturen, die von einem gegenwärtigen Zeitpunkt bis zu einem vorbestimmten vergangenen Zeitpunkt geholt wurden, mit vorbestimmten Gewichtungskoeffizienten ist; und der Gewichtungskoeffizient so eingestellt ist, dass er kleiner wird, wenn er der älteren detektierten Temperatur entspricht.

2. Glasformgebungsmaschine nach Anspruch 1, wobei:

die Steuerungseinheit aus einem ersten Computersystem (9), das eingerichtet ist, um einen Betriebszeitablauf jeder Komponente mit Bezug auf die Formgebung von Glasprodukten einzustellen, und aus einem zweiten Computersystem (5) besteht, das eingerichtet ist, um das Luftvolumen des Kühlwinds für jede der Formen (2) zu steuern;

wobei das erste Computersystem (9) eingerichtet ist, um einen Kühlzeitablauf für jede der Formen (2) zu bestimmen und um ein Zeitablaufsignal an das zweite Computersystem (5) auszugeben; und
das zweite Computersystem (5) eingerichtet ist, um eine Steuerung für eine Form (2), die dem Zeitablaufsignal entspricht, in Ansprechen auf das Zeitablaufsignal auszuführen.

3. Glasformgebungsmaschine nach Anspruch 1, wobei:

die Steuerungseinheit aus einem Computersystem besteht, das eine Funktion zum Einstellen eines Betriebszeitablaufs jeder Komponente mit Bezug auf die Formgebung von Glasprodukten und eine Funktion zum Steuern des Luftvolumens des Kühlwinds für jede der Formen (2) aufweist;
wobei das Computersystem eingerichtet ist, um einen Kühlzeitablauf für jede der Formen (2) zu ermitteln und um eine Steuerung für jede der Formen (2) auf der Grundlage des Ermittlungsergebnisses individuell auszuführen.

4. Glasformgebungsmaschine nach Anspruch 1, wobei

die Steuerungseinheit eingerichtet ist, um ein Ergebnis der Berechnung durch PID-Regelung auf eine vorbestimmte Obergrenze zu korrigieren, wenn das Ergebnis größer als die Obergrenze ist, und um das Ergebnis auf eine vorbestimmte Untergrenze zu korrigieren, wenn das Ergebnis kleiner als die Untergrenze ist.

5. Glasformgebungsmaschine nach Anspruch 1, wobei

die Steuerungseinheit eingerichtet ist, um das aktuelle Ergebnis zu korrigieren, um die Differenz zu dem vorhergehenden Ergebnis dem Schwellenwert anzugleichen, wenn eine Differenz zwischen einem aktuellen Ergebnis der Berechnung durch PID-Regelung und einem vorherigen Ergebnis der Berechnung einen vorbestimmten Schwellenwert überschreitet.

## Revendications

1. Machine de formage de verre, comprenant :

une pluralité de moules (2) adaptés pour former des produits en verre ;
des mécanismes de refroidissement (6) adaptés pour exposer un courant d'air de refroidissement vers les moules respectifs (2) pour commander individuellement les températures des moules respectifs (2), chacun des mécanismes de refroidissement (6) incluant un capteur de température (3) adapté pour détecter une température d'un moule correspondant (2), un trajet (7) adapté pour introduire le courant d'air de refroidissement vers le moule (2), et un mécanisme de valve (8) adapté pour ouvrir et pour fermer le trajet (7), et
une unité de commande adaptée pour commander une opération d'ouverture et de fermeture du mécanisme de valve (8) de chaque moule (2), sur la base de la température du moule (2) détectée par le capteur de température correspondant (3), afin de commander un volume d'air du courant d'air de refroidissement qui est introduit dans le moule (2),
dans laquelle l'unité de commande est adaptée pour déterminer une quantité opérationnelle de chacun des mécanismes de valve (8) par une commande dite "PID",
dans laquelle l'unité de commande est adaptée pour effectuer un calcul par commande PID en utilisant la température détectée du moule (2) extraite à intervalles constants pour obtenir la quantité opérationnelle du mécanisme de valve (8), et une expression du calcul inclut un terme proportionnel, un terme intégral et un terme dérivé ;
dans lequel le terme intégral est un produit d'une valeur accumulée d'une déviation de température de la température détectée par rapport à une température cible et d'un coefficient intégral ; la valeur accumulée de la déviation de température est une sommation de produits des déviations de température des températures détectées extraites depuis un temps présent jusqu'à un temps passé prédéterminé et de coefficients de pondération prédéterminées ; et
le coefficient de pondération est fixé pour être d'autant plus petit qu'il correspond à des températures détectées plus anciennes.

2. Machine de formage de verre selon la revendication 1, dans laquelle l'unité de commande est constituée d'un premier système d'ordinateur (9) adapté pour fixer une temporisation de fonctionnement de chaque composant en relation avec la formation de produits en verre et d'un second système d'ordinateur (5) adapté pour commander le volume d'air du courant d'air de refroidissement pour chacun des moules (2) ;

dans laquelle le premier système d'ordinateur (9) est adapté pour déterminer une temporisation de refroidissement pour chacun des moules (2) et pour délivrer un signal de temporisation au second système d'ordinateur (5) ; et le second système d'ordinateur (5) est adapté pour exécuter une commande pour un moule (2) correspondant au signal de temporisation en réponse au signal de temporisation.

3. Machine de formage de verre selon la revendication 1, dans laquelle l'unité de commande est constituée d'un système d'ordinateur ayant une fonction consistant à fixer une temporisation de fonctionnement de chaque composant en relation avec la formation de produits en verre et une fonction consistant à commander le volume d'air du courant d'air de refroidissement pour chacun des moules (2) ;

dans laquelle le système d'ordinateur est adapté pour déterminer une temporisation de refroidissement pour chacun des moules (2) et pour effectuer individuellement une commande pour chacun des moules (2) en se basant sur le résultat de détermination.

4. Machine de formage de verre selon la revendication un 1, dans laquelle l'unité de commande est adaptée pour corriger un résultat de calcul par commande PID à une limite supérieure prédéterminée quand le résultat est plus élevé que la limite supérieure et pour corriger le résultat à une limite inférieure prédéterminée quand le résultat est plus faible que la limite inférieure.

5. Machine de formage de verre selon la revendication 1, dans laquelle l'unité de commande est adaptée pour corriger le résultat actuel pour faire la différence depuis le résultat précédent égal à la valeur seuil, quand une différence entre un résultat actuel de calcul par commande PID et un résultat précédent du calcul excède une valeur seuil prédéterminée.

Fig. 1

# Fig. 2

Fig. 3

Fig. 4

Fig. 5

START

IS IT TIME
FOR PERFORMING ――― ST1
COOLING?                NO

YES

IS CALCULATION ――― ST2
NO    TO BE PERFORMED?

YES

INQUIRE ABOUT MOLD ――― ST3
TEMPERATURE

RECEIVED? ――― ST4
NO

YES

STORE CURRENT ――― ST5
TEMPERATURE DATA

CALCURATE COOLING TIME ――― ST6

IS FIRST CRITERION ――― ST7
SATISFIED?    NO

YES    FIRST CORRECTION PROCESS ――― ST8

IS SECOND CRITERION ――― ST9
SATISFIED?    NO

ST13    YES    SECOND CORRECTION PROCESS ――― ST10

DETERMINE COOLING TIME
TO BE PREDETERMINED TIME

DETERMINE COOLING TIME ――― ST11

PERFORM COOLING ――― ST12

14

# Fig. 6

(1)

MOLD
TEMPERATURE

TIME

T(CHANGE IN TARGET TEMPERATURE)

(2)

MOLD
TEMPERATURE

TIME

Fig. 7

EP 1 671 934 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002037634 A

- JP SHOWA53147707 B